# FASCICULE DE BREVET EUROPEEN

(11) **EP 0 595 713 B1**
(45) Date de publication et mention de la délivrance du brevet: **06.08.1997**
(21) Numéro de dépôt: 93402630.3
(22) Date de dépôt: 26.10.1993
(51) Int. Cl.: B60H 1/00, B60H 1/22, F25B 29/00

(54) **Dispositif et procédé de climatisation d'un véhicule, notamment d'un véhicule électrique**
Verfahren und Anlage zur Klimatisierung eines Fahrzeugs, insbesondere eines Elektrofahrzeugs
Method and device for vehicle air conditioning, in particular for an electric vehicle

(30) Priorité: 26.10.1992 FR 9212740
(43) Date de publication de la demande: 04.05.1994
(73) Titulaire: VALEO THERMIQUE HABITACLE, 78320 Le Mesnil-Saint-Denis (FR)
(72) Inventeur: Benedict, Olusegun, F-91940 Les Ulis (FR)
(74) Mandataire: Gamonal, Didier

(56) Documents cités:
- EP-A- 0 356 716
- EP-A- 0 473 286
- EP-A- 0 484 548
- WO-A-92/16389
- US-A- 3 719 058
- PATENT ABSTRACTS OF JAPAN vol. 7, no. 24 (M-189)(1169) 29 Juin 1983 & JP-A-57 178 913 (DIESEL KIKI K.K.) 4 Novembre 1982

## Description

L'invention concerne la climatisation des véhicules, notamment des véhicules électriques.

Un procédé connu pour régler la température dans l'habitacle d'un véhicule utilise un appareil de climatisation dans lequel un fluide réfrigérant circule de façon univoque entre un évaporateur où il reçoit de la chaleur d'un flux d'air et un condenseur où il cède de la chaleur à un flux d'air. Dans ce procédé connu, lorsqu'on souhaite refroidir un flux d'air avant de l'envoyer dans l'habitacle, on le met en contact avec l'évaporateur.

En revanche, lorsqu'on souhaite réchauffer un flux d'air avant de l'envoyer dans l'habitacle, on utilise habituellement à cet effet la chaleur dégagée par le moteur thermique d'entraînement du véhicule.

Dans le cas d'un véhicule électrique, la chaleur produite par le système d'entraînement électrique n'est pas suffisante, en hiver, pour couvrir les besoins de chauffage de l'habitacle. Il est alors nécessaire de prévoir une source auxiliaire de chaleur.

Le but de l'invention est de tirer parti, pour le chauffage de l'habitacle, de l'appareil de climatisation existant, sans changer le sens de circulation du fluide réfrigérant.

L'invention vise notamment un procédé pour régler la température dans l'habitacle d'un véhicule en utilisant un appareil de climatisation dans lequel un fluide réfrigérant circule de façon univoque entre au moins un évaporateur où il reçoit de la chaleur d'un flux d'air et au moins un condenseur où il cède de la chaleur à un flux d'air, procédé dans lequel, lorsqu'on souhaite refroidir un flux d'air avant de l'envoyer dans l'habitacle, on fait circuler le fluide réfrigérant entre un premier évaporateur et un premier condenseur et on met ledit flux d'air en contact avec le premier évaporateur, caractérisé en ce que, lorsqu'on souhaite réchauffer un flux d'air avant de l'envoyer dans l'habitacle, on fait circuler le fluide réfrigérant entre un second évaporateur et un second condenseur et on met ledit flux d'air à réchauffer en contact avec le second condenseur.

L'utilisation d'évaporateurs différents et de condenseurs différents pour le refroidissement et pour le chauffage permet d'une part de dimensionner chacun de ces éléments selon la puissance calorifique maximale requise pour sa fonction respective, d'autre part de disposer chacun d'eux à l'emplacement optimal dans le circuit d'air.

Le second évaporateur peut notamment être monté en parallèle avec le premier évaporateur et le second condenseur en parallèle avec le premier condenseur dans un même circuit de fluide réfrigérant, des moyens étant prévus pour mettre sélectivement en service l'un ou l'autre des deux évaporateurs et l'un ou l'autre des deux condenseurs.

Il est en outre prévu que les moyens de mise en service comprennent au moins deux vannes à trois voies propres à mettre sélectivement en liaison, l'une le premier évaporateur ou le second évaporateur, l'autre le premier condenseur ou le second condenseur, avec des composants communs dudit circuit tels qu'un compresseur et un détendeur.

L'invention a également pour objet un dispositif pour la mise en oeuvre du procédé défini ci-dessus, comprenant un circuit d'air comportant un premier tronçon contenant des composants à refroidir du véhicule, subdivisé sur une fraction de sa longueur en une première branche et une seconde branche disposées mutuellement en parallèle et contenant respectivement le premier condenseur et le second évaporateur, et un second tronçon placé en aval du premier tronçon, subdivisé sur une fraction de sa longueur en une troisième branche et une quatrième branche disposées mutuellement en parallèle, la troisième branche contenant le premier évaporateur et la quatrième branche contenant le second condenseur, des moyens pour produire un premier flux d'air dans le premier tronçon, des moyens pour produire un second flux d'air dans le second tronçon, des moyens d'obturation sélective propres à permettre ou à interdire la circulation desdits flux d'air dans chacune des première seconde, troisième et quatrième branches, un obturateur commandé propre à interrompre la communication entre les premier et second tronçons, une entrée d'air extérieur à l'extrémité amont du premier tronçon, une sortie d'air vers l'extérieur à l'extrémité aval du premier tronçon, une entrée d'air extérieur et une entrée d'air de recirculation à l'extrémité amont du second tronçon, munies de moyens de réglage des proportions d'air extérieur et d'air en recirculation, et une sortie d'air vers l'habitacle à l'extrémité aval du second tronçon.

D'autres caractéristiques, complémentaires ou alternatives, du dispositif selon l'invention sont énoncées ci-après :
- Une source de chauffage d'appoint munie de moyens de commande est disposée dans le premier tronçon.
- Les composants à refroidir comprennent une batterie d'alimentation pour un moteur électrique d'entraînement du véhicule et/ou un compresseur pour le fluide réfrigérant.
- Il comprend des moyens de commande coordonnée propres à agir sur les moyens d'obturation sélective et sur les moyens de mise en service des évaporateurs et des condenseurs de façon que chaque évaporateur et chaque condenseur soit en service lorsqu'un flux d'air circule dans la branche du circuit d'air dans laquelle il se trouve et hors service lorsqu'aucun flux d'air ne circule dans ladite branche.
- Les moyens de commande coordonnée sont propres à établir une première configuration du dispositif dans laquelle le premier évaporateur et le premier condenseur sont en service, le second évaporateur et le second condenseur sont hors service et l'obturateur commandé interrompt la communication entre les premier et second tronçons, et une seconde configuration dans laquelle le second évaporateur et le second condenseur sont en service, le premier évaporateur et le premier condenseur sont hors service et l'obturateur commandé ouvre la communication entre les premier et second tronçons.

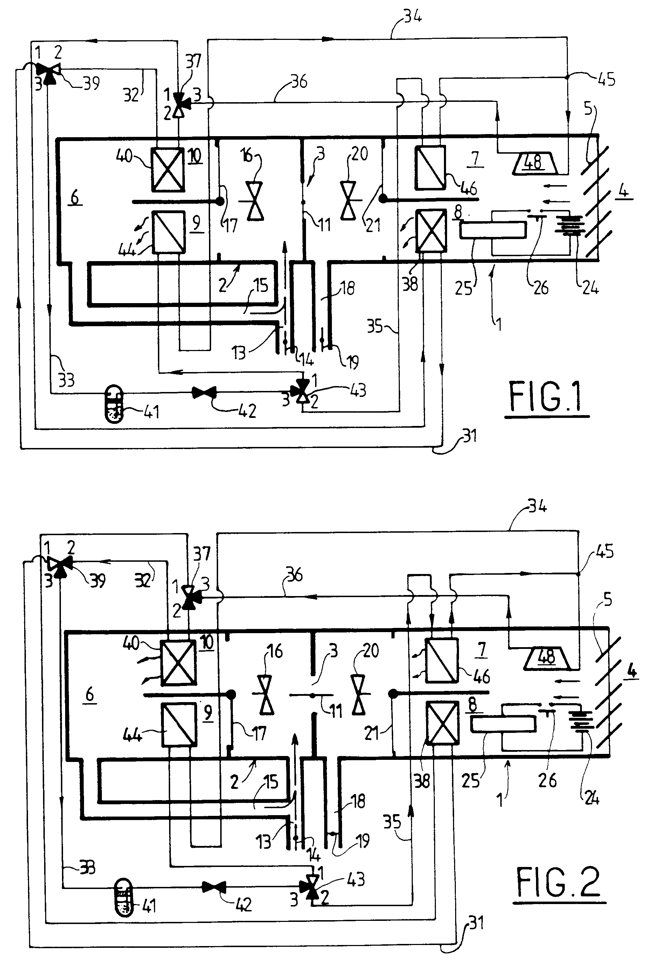

D'autres caractéristiques et avantages de l'invention apparaîtront à l'examen de la description détaillée ci-après, et des dessins annexés, sur lesquels les figures 1 et 2 sont des schémas analogues représentant un dispositif selon l'invention dans deux configurations correspondant au fonctionnement en été et en hiver respectivement.

Le dispositif illustré, destiné à la climatisation d'un véhicule automobile à entraînement électrique, comprend un circuit d'air de climatisation composé essentiellement de deux tronçons 1 et 2 raccordés en série par l'intermédiaire d'une ouverture de communication 3 pouvant être obturée par un volet 11. L'extrémité amont, par rapport au sens de circulation de l'air, du tronçon 1 communique avec l'extérieur du véhicule par une ouverture 4 munie d'un obturateur 5 représenté sous la forme d'un volet à lamelles pivotantes multiples, et l'extrémité aval du tronçon 2 communique avec l'habitacle 6 du véhicule.

Le tronçon 1 est subdivisé, sur une partie de sa longueur, en une première branche 7 et une seconde branche 8. De même, le tronçon 2 est subdivisé sur une partie de sa longueur en une troisième branche 9 et une quatrième branche 10. En amont des branches 9 et 10, le tronçon 2 communique avec une entrée 13 d'air extérieur munie d'un obturateur mobile 14 et avec une entrée 15 d'air de recirculation provenant de l'habitacle, et contient un groupe motoventilateur 16. Un volet mobile 17 permet de faire circuler au choix dans la branche 9 ou dans la branche 10 le flux d'air produit par le groupe motoventilateur 16. De même, le tronçon 1, en aval des branches 7 et 8, communique avec une sortie 18 d'air vers l'extérieur, munie d'un obturateur mobile 19, et contient un groupe motoventilateur 20. Un volet réglable 21 permet de faire circuler au choix dans la branche 7 ou dans la branche 8 le flux d'air produit par le groupe motoventilateur 20. Le tronçon 1, en amont des branches 7 et 8, contient la batterie d'entraînement 24 du véhicule, ainsi qu'une résistance de chauffage d'appoint 25 pouvant être alimentée par la batterie 24 à travers un interrupteur 26.

Le dispositif comprend également un circuit de fluide réfrigérant composé principalement de six branches 31 à 36 reliant deux à deux trois électrovannes à trois voies 37, 39 et 43, qui ont chacune leurs trois voies repérées par les trois chiffres 1,2 et 3, et un quatrième point de raccordement en T 45. La branche 31, dans laquelle le fluide peut circuler de la voie 1 de l'électrovanne 37 à la voie 1 de l'électrovanne 39, contient un premier condenseur 38, disposé dans la branche 8 du circuit d'air. La branche 32, qui va de la voie 2 de l'électrovanne 37 à la voie 2 de l'électrovanne 39, contient un second condenseur 40 qui est placé dans la branche 10 du circuit d'air. Dans la branche 33, qui va de la voie 3 de l'électrovanne 39 à la voie 3 de l'électrovanne 43, sont montés une bouteilie/déshydrateur 41 et un détendeur 42. De la voie 1 de l'électrovanne 43 au point 45, le fluide réfrigérant peut circuler dans la branche 34 à travers un premier évaporateur 44, disposé dans la branche 9 du circuit d'air, et dans la branche 35, qui va de la voie 2 de l'électrovanne 43 au point 45, à travers un second évaporateur 46 disposé dans la branche 7 du circuit d'air. Enfin, le fluide retourne du point 45 à la voie 3 de l'électrovanne 37 par la branche 36, à travers un compresseur 48 placé dans le tronçon 1 du circuit d'air, en amont des branches 7 et 8. Les branches 31, 33, 34 et 36 constituent un circuit de climatisation classique, auquel s'ajoutent, selon l'invention, les branches 32 et 35 en parallèle respectivement avec les branches 31 et 34.

La figure 1 montre la configuration du circuit d'air pour le fonctionnement du dispositif en été. Sur cette figure, les ouvertures 4, 13 et 18 sont dégagées par les obturateurs correspondants, et l'ouverture 3 entre les tronçons 1 et 2 est obturée. Le volet 17 obture l'extrémité amont de la branche 10, et le volet 21 obture l'extrémité aval de la branche 7. Par ailleurs, les passages 1-3 des électrovannes 37, 39 et 43. Le fluide circule donc dans le condenseur 38 et dans l'évaporateur 44, mais non dans le condenseur 40 ni dans l'évaporateur 46. De l'air extérieur pénétrant par l'entrée 13, entraîné par le groupe motoventilateur 16, circule dans la région amont du tronçon 2 et dans la branche 9, où il est refroidi au contact de l'évaporateur 44, avant d'arriver dans l'habitacle. Par ailleurs, le groupe motoventilateur 20 aspire un flux d'air depuis l'entrée 4 qui est chauffé par la batterie 24 et par le compresseur 48 et parvient dans la branche 8, où il se charge de la chaleur dégagée par le condenseur 38, pour l'évacuer vers l'extérieur par la sortie 18. Bien entendu, l'interrupteur 26 est ouvert et la résistance 25 est hors service.

Au lieu d'être entièrement ouvert comme représenté, le volet 14 peut être partiellement ou totalement fermé, de façon que l'air pénétrant dans la branche 9 et envoyé dans l'habitacle soit partiellement ou totalement de l'air en recirculation.

La figure 2 représente la configuration du circuit d'air pour un chauffage modéré de l'habitacle, notamment lorsque la température extérieure est encore supérieure à une valeur limite de 5 à 7°C. Les ouvertures 3, 4 et 13 sont dégagées et l'ouverture 18 est obturée. Les volets 17 et 21 obturent les branches 9 et 8 respectivement. Les passages 2-3 des électrovannes du circuit de fluide réfrigérant sont ouverts, de sorte que l'évaporateur 46 et le condenseur 40, et non plus l'évaporateur 44 et le condenseur 38, sont en service. L'interrupteur 26 est encore ouvert.

Le flux d'air aspiré par le groupe motoventilateur 20 et pénétrant par l'ouverture 4, et chauffé par la batterie 24 et le compresseur 48, passe dans la branche 7 où il cède à l'évaporateur 46 une quantité de chaleur permettant le fonctionnement du circuit de fluide réfrigérant. Ce flux d'air est transmis par l'ouverture 3 dans le tronçon 2 où il s'y ajoute un flux supplémentaire produit par le groupe motoventilateur 16 et pénétrant par les ouvertures 13 et 15. Le flux total résultant passe dans la branche 10 où il reçoit de la chaleur du condenseur 4, puis parvient dans l'habitacle 6.

En cas de froid plus intense, une source de chaleur complémentaire peut être fournie par la résistance 25, en fermant l'interrupteur 26.

Comme dans la première configuration décrite, la proportion d'air en recirculation admise à l'extrémité amont du tronçon 2 peut être augmentée jusqu'à 100% en fermant progressivement le volet 14.

## Revendications

1. Procédé pour régler la température dans l'habitacle d'un véhicule en utilisant un appareil de climatisation dans lequel un fluide réfrigérant circule de façon univoque entre au moins un évaporateur (44) où il reçoit de la chaleur d'un flux d'air et au moins un condenseur (38) où il cède de la chaleur à un flux d'air, procédé dans lequel, lorsqu'on souhaite refroidir un flux d'air avant de l'envoyer dans l'habitacle (6), on fait circuler le fluide réfrigérant entre un premier évaporateur (44) et un premier condenseur (38) et on met ledit flux d'air en contact avec le premier évaporateur, caractérisé en ce que, lorsqu'on souhaite réchauffer un flux d'air avant de l'envoyer dans l'habitacle, on fait circuler le fluide réfrigérant entre un second évaporateur (46) et un second condenseur (40) et on met ledit flux d'air à réchauffer en contact avec le second condenseur.

2. Procédé selon la revendication 1, caractérisé en ce que le second évaporateur est monté en parallèle avec le premier évaporateur et le second condenseur en parallèle avec le premier condenseur dans un même circuit de fluide réfrigérant (31-36), des moyens (37, 39, 43) étant prévus pour mettre sélectivement en service l'un ou l'autre des deux évaporateurs et l'un ou l'autre des deux condenseurs.

3. Procédé selon la revendication 2, caractérisé en ce que les moyens de mise en service comprennent au moins deux vannes à trois voies propres à mettre sélectivement en liaison, l'une (43) le premier évaporateur ou le second évaporateur, l'autre (37, 39) le premier condenseur ou le second condenseur, avec des composants communs dudit circuit tels qu'un compresseur (48) et un détendeur (42).

4. Dispositif pour la mise en oeuvre du procédé selon l'une des revendications 1 à 3, comprenant un circuit d'air comportant un premier tronçon (1) contenant des composants à refroidir (24, 48) du véhicule, subdivisé sur une fraction de sa longueur en une première branche (8) et une seconde branche (7) disposées mutuellement en parallèle et contenant respectivement le premier condenseur (38) et le second évaporateur (46), et un second tronçon placé en aval du premier tronçon, subdivisé sur une fraction de sa longueur en une troisième branche (9) et une quatrième branche (10) disposées mutuellement en parallèle, la troisième branche contenant le premier évaporateur (44) et la quatrième branche contenant le second condenseur (40), des moyens (20) pour produire un premier flux d'air dans le premier tronçon, des moyens (16) pour produire un second flux d'air dans le second tronçon, des moyens d'obturation sélective (21, 17) propres à permettre ou à interdire la circulation desdits flux d'air dans chacune des première, seconde, troisième et quatrième branches, un obturateur commandé (11) propre à interrompre la communication (3) entre les premier et second tronçons, une entrée d'air extérieur (4) à l'extrémité amont du premier tronçon, une sortie d'air vers l'extérieur (18) à l'extrémité aval du premier tronçon, une entrée d'air extérieur (13) et une entrée d'air de recirculation (15) à l'extrémité amont du second tronçon, munies de moyens (14) de réglage des proportions d'air extérieur et d'air en recirculation, et une sortie d'air vers l'habitacle à l'extrémité aval du second tronçon.

5. Dispositif selon la revendication 4, caractérisé en ce qu'une source de chauffage d'appoint (25) munie de moyens de commande (26) est disposée dans le premier tronçon.

6. Dispositif selon l'une des revendications 4 et 5, caractérisé en ce que les composants à refroidir comprennent une batterie d'alimentation (24) pour un moteur électrique d'entraînement du véhicule et/ou un compresseur (48) pour le fluide réfrigérant.

7. Dispositif selon l'une des revendications 4 à 6, caractérisé en ce qu'il comprend des moyens de commande coordonnée propres à agir sur les moyens d'obturation sélective (21, 17) et sur les moyens de mise en service (37, 39, 43) des évaporateurs et des condenseurs de façon que chaque évaporateur et chaque condenseur soit en service lorsqu'un flux d'air circule dans la branche du circuit d'air dans laquelle il se trouve et hors service lorsqu'aucun flux d'air ne circule dans ladite branche.

8. Dispositif selon la revendication 7, caractérisé en ce que les moyens de commande coordonnée sont propres à établir une première configuration du dispositif dans laquelle le premier évaporateur et le premier condenseur sont en service, le second évaporateur et le second condenseur sont hors service et l'obturateur commandé interrompt la communication entre les premier et second tronçons, et une seconde configuration dans laquelle le second évaporateur et le second condenseur sont en service, le premier évaporateur et le premier condenseur sont hors service et l'obturateur commandé ouvre la communication entre les premier et second tronçons.

## Claims

1. A process for regulating the temperature in the passenger space of a vehicle by using an air conditioning device in which a refrigerant circulates in a unequivocal manner between at least one evaporator (44) where it receives heat from a flow of air and at least one condenser (38) where it yields heat to a flow of air, in which process, when it is wished to cool a flow of air before conveying it into the passenger space (6), the refrigerant is circulated between a first evaporator (44) and a first condenser (38) and the said flow of air is brought into contact with the first evaporator,
**characterised in that** when it is wished to heat a flow of air before conveying it into the passenger space, the refrigerant is circulated between a second evaporator (46) and a second condenser (40) and said flow of air to be heated is brought into contact with the second condenser.

2. A process according to Claim 1,
**characterised in that** the second evaporator is mounted in parallel with the first evaporator and the second condenser in parallel with the first condenser in a same refrigerant circuit (31 - 36), means (37, 39, 43) being provided to bring selectively into operation either one of the two evaporators and either one of the two condensers.

3. A process according to Claim 2,
**characterised in that** the operating means comprise at least two three-way valves, one (43) which is capable of selectively connecting the first evaporator or the second evaporator, the other (37, 39) which is capable of selectively connecting the first condenser or the second condenser, with common components of the said circuit, such as a compressor (48) and an expansion valve (42).

4. A device for using the process according to one of Claims 1 to 3, comprising an air circuit having a first section (1) containing components (24, 48) to be cooled of the vehicle, subdivided over a fraction of its length into a first branch (8) and a second branch (7) disposed mutually in parallel and containing respectively the first condenser (38) and the second evaporator (46), and a second section placed downstream from the first section, subdivided over a fraction of its length into a third branch (9) and a fourth branch (10) disposed mutually in parallel, the third branch containing the first evaporator (44) and the fourth branch containing the second condenser (40), means (20) for producing a first flow of air in the first section, means (16) for producing a second flow of air in the second section, selective shut-off means (21, 17) capable of allowing or preventing the circulation of said flows of air in each of the first, second, third and fourth branches, a controlled shutter (11) capable of interrupting the communication (3) between the first and second sections, an external air inlet (4) at the upstream end of the first section, an air outlet towards the outside (18) at the downstream end of the first section, an external air inlet (13) and a recirculation air inlet (15) at the upstream end of the second section, equipped with means (14) for regulating the proportions of external air and air in recirculation, and an air outlet towards the passenger space at the downstream end of the second section.

5. A device according to Claim 4,
**characterised in that** an auxiliary heating source (25) equipped with control means (26) is disposed in the first section.

6. A device according to one of Claims 4 and 5,
**characterised in that** the components to be cooled comprise a power supply battery (24) for an electric engine for powering the vehicle and/or a compressor (48) for the refrigerant.

7. A device according to one of Claims 4 to 6,
**characterised in that** it comprises coordinated control means capable of acting on the selective shut-off means (21, 17) and on the means (37, 39, 43) for bringing into operation the evaporators and condensers so that each evaporator and each condenser is in operation when a flow of air circulates in the branch of the circuit of air in which it is located and is not in operation when no flow of air circulates in said branch.

8. A device according to Claim 7,
**characterised in that** the coordinated control means are capable of establishing a first configuration of the device in which the first evaporator and the first condenser are in operation, the second evaporator and the second condenser are not in operation and the controlled shutter interrupts the communication between the first and second sections, and a second configuration in which the second evaporator and the second condenser are in operation, the first evaporator and the first condenser are not in operation and the controlled shutter opens the communication between the first and second sections.

## Patentansprüche

1. Verfahren zur Regelung der Temperatur im Innenraum eines Fahrzeugs unter Verwendung einer Klimaanlage, in der ein Kältemittel in einer Richtung zwischen mindestens einem Verdampfer (44), in dem es Wärme von einem Luftstrom aufnimmt, und mindestens einem Kondensator (38), in dem es Wärme an einen Luftstrom abgibt, zirkuliert, wobei das Kältemittel, wenn ein Luftstrom vor seiner Einleitung in den Fahrzeuginnenraum (6) gekühlt werden soll, zwischen einem ersten Verdampfer (44) und einem ersten Kondensator (38) zum Zirkulieren und der besagte Luftstrom mit dem ersten Verdampfer in Kontakt gebracht wird , **dadurch gekennzeichnet,** daß das Kältemittel, wenn ein Luftstrom vor seiner Einleitung in den Fahrzeuginnenraum erwärmt werden soll, zwischen einem zweiten Verdampfer (46) und einem zweiten Kondensator (40) zum Zirkulieren und der besagte zu erwärmende Luftstrom mit dem zweiten Kondensator in Kontakt gebracht wird.

2. Verfahren nach Anspruch 1 , **dadurch gekennzeichnet,** daß der zweite Verdampfer mit dem ersten Verdampfer parallel und der zweite Kondensator mit dem ersten Kondensator parallel in ein und demselben Kältemittelkreislauf (31-36) angeordnet ist, wobei Mittel (37, 39, 43) vorgesehen sind, um wahlweise einen der beiden Verdampfer und einen der beiden Kondensatoren einzuschalten.

3. Verfahren nach Anspruch 2 , **dadurch gekennzeichnet,** daß die Einschaltmittel mindestens zwei Dreiwegeventile umfassen, von denen eines (43) wahlweise den ersten Verdampfer oder den zweiten Verdampfer und das andere (37, 39) den ersten Kondensator oder den zweiten Kondensator mit gemeinsamen Bestandteilen des besagten Kreislaufs, etwa mit einem Kompressor (48) oder einem Expansionsorgan (42), in Verbindung setzen kann.

4. Anlage zur Anwendung des Verfahrens nach einem der Ansprüche 1 bis 3, umfassend einen Luftkreislauf mit einem ersten Teilstück (1), das zu kühlende Bestandteile (24, 48) des Fahrzeugs enthält und auf einem Teil seiner Länge in einen ersten Strang (8) und einen zweiten Strang (7) unterteilt ist, die parallel zueinander angeordnet sind und den ersten Kondensator (38) bzw. den zweiten Verdampfer (46) enthalten, und mit einem zweiten Teilstück, das hinter dem ersten Teilstück angeordnet und auf einem Teil seiner Länge in einen dritten Strang (9) und einer vierten Strang (10) unterteilt ist, die parallel zueinander angeordnet sind, wobei der dritte Strang den ersten Verdampfer (44) und der vierte Strang den zweiten Kondensator (40) enthält, Mittel (20) zur Erzeugung eines ersten Luftstroms im ersten Teilstück, Mittel (16) zur Erzeugung eines zweiten Luftstroms im zweiten Teilstück, selektive Verschlußmittel (21, 17), um die Zirkulation der besagten Luftströme in jedem der ersten, zweiten, dritten und vierten Stränge freizugeben oder zu sperren, ein gesteuertes Verschlußorgan (11), um die Verbindung (3) zwischen dem ersten und zweiten Teilstück zu unterbrechen, einen Außenlufteinlaß (4) am vorderen Ende des ersten Teilstücks, einen Luftauslaß nach außen (18) am hinteren Ende des ersten Teilstücks, einen Außenlufteinlaß (13) und einen Umlufteinlaß (15) am vorderen Ende des zweiten Teilstücks, die mit Mitteln (14) zur Einstellung der Außenluft- und Umluftanteile versehen sind, und einen Luftauslaß zum Fahrzeuginnenraum am hinteren Ende des zweiten Teilstücks.

5. Anlage nach Anspruch 4 , **dadurch gekennzeichnet,** daß eine Zusatzwärmequelle (25) mit Steuerungsmitteln (26) im ersten Teilstück angeordnet ist.

6. Anlage nach einem der Ansprüche 4 und 5 , **dadurch gekennzeichnet,** daß die zu kühlenden Bestandteile eine Versorgungsbatterie (24) für einen elektrischen Antriebsmotor des Fahrzeugs und/oder einen Kompressor (48) für das Kältemittel umfassen.

7. Anlage nach einem der Ansprüche 4 bis 6 , **dadurch gekennzeichnet,** daß sie Mittel zur koordinierten Steuerung umfaßt, die auf die selektiven Verschlußmittel (21, 17) und auf die Einschaltmittel (37, 39, 43) der Verdampfer und der Kondensatoren einwirken können, so daß jeder Verdampfer und jeder Kondensator eingeschaltet wird, wenn ein Luftstrom in dem Strang des Luftkreislaufs zirkuliert, in dem er sich befindet, und ausgeschaltet wird, wenn kein Luftstrom in dem besagten Strang zirkuliert.

8. Anlage nach Anspruch 7 , **dadurch gekennzeichnet,** daß die Mittel zur koordinierten Steuerung eine erste Konfiguration der Anlage herstellen, in welcher der erste Verdampfer und der erste Kondensator eingeschaltet sind, der zweite Verdampfer und der zweite Kondensator ausgeschaltet sind und das gesteuerte Verschlußorgan die Verbindung zwischen dem ersten und zweiten Teilstück unterbricht, und eine zweite Konfiguration, in welcher der zweite Verdampfer und der zweite Kondensator eingeschaltet sind, der erste Verdampfer und der erste Kondensator ausgeschaltet sind und das gesteuerte Verschlußorgan die Verbindung zwischen dem ersten und zweiten Teilstück öffnet.
